# EUROPEAN PATENT APPLICATION

(11) **EP 3 280 117 A1**
(43) Date of publication of application: **07.02.2018**
(21) Application number: 17169164.5
(22) Date of filing: 03.05.2017
(51) Int. Cl.: H04L 29/12

(54) **METHOD FOR RELAYING PACKETS WITH AID OF NETWORK ADDRESS TRANSLATION IN NETWORK SYSTEM, AND ASSOCIATED APPARATUS**

(30) Priority: 04.08.2016 TW 105124714
(71) Applicant: Synology Incorporated, Taipei 103 (TW)
(72) Inventor: Chen, Yu-Chung, 114 Taipei City (TW); Chen, Kan-Yueh, 338 Taoyuan City (TW); Liu, Jia-Yu, 238 New Taipei City (TW)
(74) Representative: Becker Kurig Straus

(57) **Abstract**

A method for relaying packets in a network system (100) with the aid of network address translation and an associated apparatus are provided. The method includes: controlling a relay server (120) to receive a first packet from a client device (110-1), wherein the first packet carries a source Internet Protocol (IP) address and a destination IP address; controlling the relay server (120) to change the destination IP address carried by the first packet in order to relay the first packet to a peer device, wherein the peer device obtains the source IP address from the first packet; and controlling the relay server (120) to receive a second packet from the peer device and relay the second packet to the client device (110-1).

## Description

The present invention relates to a packet relay mechanism, and more particularly, to a method and associated apparatus for relaying packets in a network system with the aid of network address translations.

A relay server may be implemented with a virtual private network (VPN) server. An external IP address of the VPN server allows connections for multiple users to transceive packets through VPN tunnels. The above mechanism has some disadvantages. For example, before one of the users connects a client device to the VPN server, the client device needs to be installed with additional software (such as VPN client software), causing inconvenience. In another example, when the client device transmits packets to a peer device through the VPN server and the VPN tunnels, such as another client device used by another user, the peer device will not know the external IP address of the client device. The source IP addresses of packets received by the peer device are private IP addresses in its VPN connection, rather than the external IP address of the client device. Hence, for a specific user who utilizes the VPN server to communicate, if the real IP address of the object being connected to is needed, some additional and complicated settings must be performed in advance.

Some conventional methods attempt to modify the relay server to solve the aforementioned problem, but other unwanted side effects may be introduced. For example, the entire mechanism will become more complicated. In another example, some user space applications may need to be upgraded. In another example, the firewall may not operate normally, and may have security concerns.

Hence, there is a need for a novel method and associated mechanism to solve the existing problems without introducing unwanted side effects.

This in mind, the application aims at providing a method and an apparatus in order to solve the abovementioned problems.

This is achieved by a method of for relaying packets in a network system and an associated device according to claims 1 and 2. The dependent claims pertain to corresponding further developments and improvements.

As will be seen more clearly from the detailed description following below, the claimed method includes: controlling a relay server to receive a first packet from a client device, in which the first packet carries a source Internet Protocol (IP) address and a destination IP address; controlling the relay server to modify the destination IP address carried by the first packet in order to relay the first packet to a peer device, in which the peer device obtains the source IP address from the first packet; and controlling the relay server to receive a second packet from the peer device and relay the second packet to the client device.

In addition, the claimed apparatus includes a processing circuit, positioned in a relay server of the network system. The processing circuit is arranged to control operations of the relay server, in which the operations of the relay server include: the relay server receiving a first packet from a client device, in which the first packet carries a source Internet Protocol (IP) address and a destination IP address; the relay server modifying the destination IP address carried by the first packet in order to relay the first packet to a peer device, in which the peer device obtains the source IP address from the first packet; and the relay server receiving a second packet from the peer device and relaying the second packet to the client device.

In the following, the invention is further illustrated by way of example, taking reference to the accompanying drawings. Thereof:
Fig. 1 is a diagram illustrating a network system according to an embodiment of the present invention;
Fig. 2 is a diagram illustrating implementation details of the network address translation-like (NAT-like) relay server shown in Fig. 1 according to an embodiment of the present invention;
Fig. 3 is a diagram illustrating a control scheme of the processing circuit shown in Fig. 2 according to an embodiment of the present invention; and
Fig. 4 is a flowchart illustrating a method for relaying packets in a network system with the aid of network address translation according to an embodiment of the present invention.

The embodiments of the present invention provide a method and associated apparatus for relaying packets in a network system with the aid of network address translation. The network system may include a relay server and a plurality of client devices connected to the relay server. The communications mechanism implemented by the method and associated apparatus of the present invention, such as the network system, may improve the user experience. Unlike related art methods, the communicate mechanism of the present invention does not require additional and complicated settings. When the relay server relays a packet, the relay server may prevent simultaneous modifying of all the IP addresses carried by the packet. For example, the IP address carried by the packet may include a source IP address and a destination IP address, and the relay server may modify the destination IP address rather than the source IP address. Hence, the communicate mechanism of the present invention may allow the receiving end of the packet to obtain the real IP of the transmitting end of the packet, making the relay server transparent to the client devices, in which the firewalls and user space applications of the client devices do not require additional settings. Therefore, the method and associated apparatus of the present invention may improve the user experience.

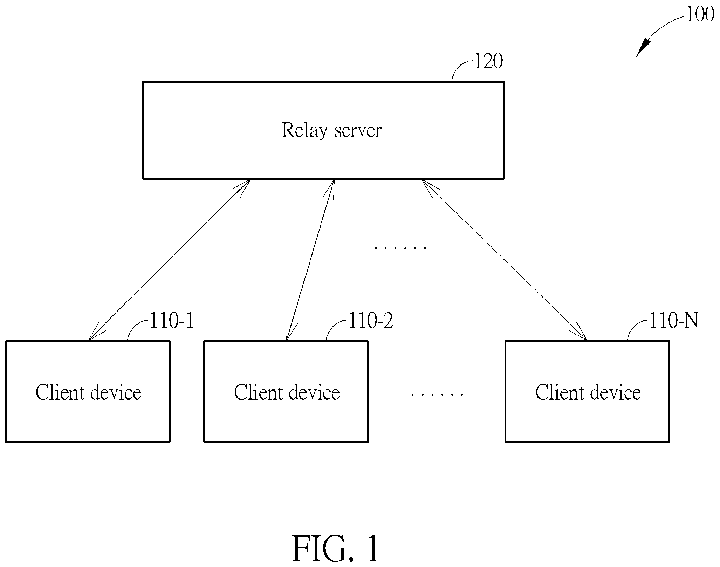

Fig. 1 is a diagram illustrating a network system 100 according to an embodiment of the present invention. The network system 100 may include a plurality of client devices, such as N client devices {110-1, 110-2, ..., 110-N}, in which the symbol "N" represents a positive integer. Examples of the N client devices {110-1, 110-2, ..., 110-N} may include (but are not limited to): a multifunctional mobile phone, tablet, wearable device, and personal computer (PC), such as a laptop computer or desktop computer. Further, the network system 100 may further include a relay server 120, in which the relay server 120 may be designed specially. For example, the relay server 120 may be a network address translation-like (NAT-like) relay server. Examples of the relay server 120 may include (but are not limited to): a server for executing at least one predetermined program module, in which the predetermined program module includes program codes for performing the method for relaying packets with the aid of network addresses in the relay server.

As shown in Fig. 1, the network system 100 may further include the N communications channels between the N client devices {110-1, 110-2, ..., 110-N} and the relay server 120. According to this embodiment, the apparatus for relaying packets with the aid of network addresses in the relay server may include at least one portion (part or all) of the network system 100, such as one or more client devices within the N client devices {110-1, 110-2, ..., 110-N}, one or more corresponding communications channel in the N communications channel, and/or the relay server 120. Further, the relay server 120 may relay at least one packet transmitted by any of the N client devices {110-1, 110-2, ..., 110-N} to a peer device, such as another client device 110-p within the N client devices {110-1, 110-2, ..., 110-N}, in which the symbol "n" may represent a positive integer between [1, N], and the symbol "p" may represent a positive integer between [1, N] which is not equal to n.

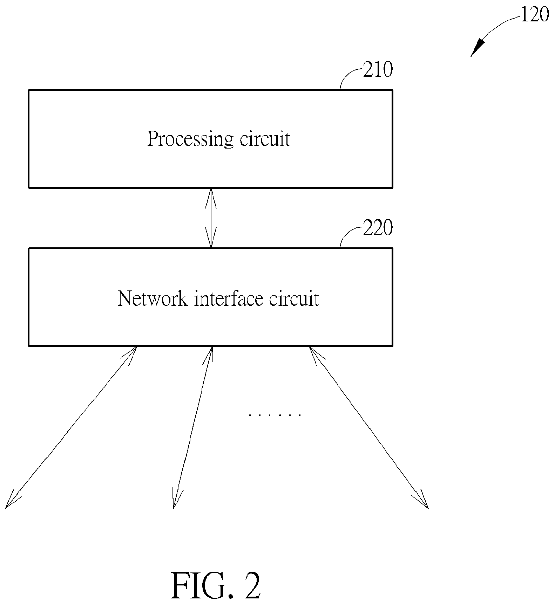

Fig. 2 is a diagram illustrating implementation details of the relay server 120 shown in Fig. 1 according to an embodiment of the present invention. As shown in Fig. 2, the relay server 120 may include a processing circuit 210 and a network interface circuit 220, in which the processing circuit 210 and the network interface circuit 220 are coupled to each other, and are both positioned in the relay server 120. According to this embodiment, the network interface circuit 220 may provide network services for the relay server 120 (especially the processing circuit 210 therein), to allow the relay server 120 to utilize the N communications channels to perform communications operations of the N client devices {110-1, 110-2, ..., 110-N}. For example, when the IP address (especially the external IP address) of the relay server 120 is known, the client device 110-n may be linked to the relay server 120 to establish communications channels between the client device 110-n and the relay server 120. The communications operations may be performed based on at least one predetermined protocol, such as one or more existing network protocols. Examples of the existing network protocol may include (but are not limited to): a portion or all of protocols in an Internet protocol suite (IPS) (which may also be called transmission control protocol/Internet (TCP/IP)), such as the user datagram protocols (UDPs).

Further, the processing circuit 210 may control the operations of the relay server 120. For example, the processing circuit 210 may include at least one processor, and the processor may execute the aforementioned at least one predetermined program module in order to control the operations of the relay server 120. This is for illustrative purposes, rather than a limitation of the present invention. According to some embodiments, the implementation of the processing circuit 210 may be modified. For example, the processing circuit 210 may be implemented as an Application-Specific Integrated Circuit (ASIC) for controlling the operations of the relay server 120 according to the method for relaying packets with the aid of network addresses in the relay server.

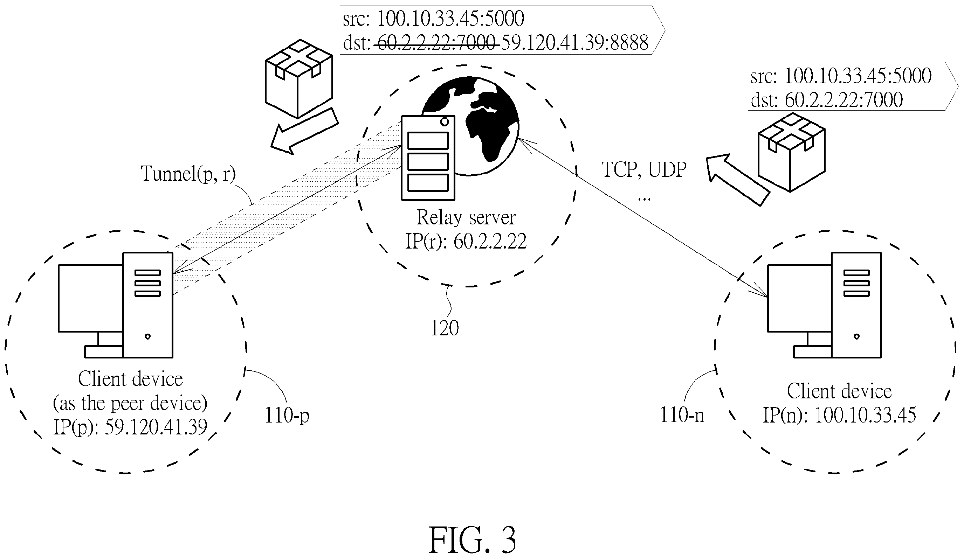

Fig. 3 is a diagram illustrating a control scheme of the processing circuit 210 shown in Fig. 2 according to an embodiment of the present invention. According to the control scheme, a transmitting end of the network system 100 (e.g. the client device 110-n) does not need to install additional software. In addition, a receiving end (e.g. the client device 110-p) of the network system 100 does not need to upgrade one or more applications for ensuring the compatibility of the applications, and does not require additional settings for the firewall. Hence, the control scheme may prevent problems existing in the related arts.

According to this embodiment, the behaviors of the relay server 120 may be configured to have some characteristics that allow the users of the client device 110-n and 110-p to transmit packets to each other without the need for performing additional settings. As shown in Fig. 3, when relaying a packet (e.g. a first packet, which is depicted as a package for better understanding) from the client device 110-n, the relay server 120 may only modify the destination IP address dst carried by the packet without modifying the source IP address src carried by the packet. For example, the IP address IP(n) of the client device 110-n may be "100.10.33.45", and the IP address IP(p) of the client device 110-p may be "59.120.41.39", and the IP address IP(r) of the relay server 120 may be "60.2.2.22". The IP addresses IP(n), IP(p) and IP(r) may be external IP addresses. When the client device 110-n has just transmitted the packet, the destination IP address dst and source IP address src carried by the packet are the IP addresses IP(r) and IP(n), respectively, such as "60.2.2.22" and "100.10.33.45" carried by the packet shown on the right hand side of Fig. 3, in which "7000" and "5000" may be an example of the corresponding port numbers (also called network port numbers or communications port numbers).

After receiving the packet, the relay server 120 may modify the destination IP address dst carried by the packet into the IP address IP(p) of the client device 110-p from the IP address IP(r), such as the IP address "59.120.41.39" carried by the packet shown in the top left corner of Fig. 3, in which "8888" may be an example of the corresponding port number. Since the relay server 120 can prevent modifying of the source IP address src carried by the packet, the peer device (e.g. the client device 110-p) may obtain the external IP address of the client device 110-n (e.g. "100.10.33.45"). For example, when the packet is received, the source IP address src from which the client device 110-p receives the packet is the IP address IP(n) of the client device 110-n, rather than the IP address IP(r) of the relay server 120. Further, when the client device 110-p returns a packet, such as a second packet, the relay server 120 may provide a default path as a packet returning path. When the peer device, such as the client device 110-p, does not require additional settings, the packet sent by the peer device (e.g. the client device 110-p) may be correctly delivered to the target client device (e.g. the client device 110-n). Based on this mechanism, the operating systems of the client device 110-n and the client device 110-p may correctly transmit packets to each other without the need for additional settings.

Note that the client device 110-n does not require a network tunnel for linking to the relay server 120. As long as the IP address IP(r) and the port number of the relay server 120 are known, the client device 110-n may be connected to the relay server 120 through an existing network protocol (e.g. TCP, UDP, etc. as shown in Fig. 3), and the relay server 120 may utilize the network port forwarding to relay packets. Hence, the client device 110-n does not need to install additional software, and does not require additional settings. Further, the tunnel Tunnel(p, r) may be an example of the aforementioned default path. As shown in Fig. 3, the peer device such as the client device 110-p may utilize the tunnel Tunnel(p, r) to link to the relay server 120, and may return the second packet along the tunnel Tunnel(p, r) during returning packets. When the second packet is sent from the peer device such as the client device 110-p, the second packet will be sent back to the relay server 120 along the tunnel Tunnel(p, r) in a default manner. When the relay server 120 receives the second packet, the relay server 120 may directly send the second packet to the client device 110-n by modifying the source IP address carried by the second packet (i.e. the IP address IP(r) of the relay server 120 modified from the IP address IP(p)), in which the source IP address of the second packet received by the client device 110-n is the IP address IP(r) of the relay server 120.

In one embodiment, the second packet sent by the peer device such as the client device 110-p may carry a specific message. The peer device is not limited to transmit acknowledgement packets only. Further, when the client device 110-n triggers the communications operations shown in Fig. 3, the client device 110-n will establish the connection between the client device 110-n and the peer device (e.g. the client device 110-p). The peer device (e.g. the client device 110-p) does not take the initiative to establish such a connection. Note that the client device 110-n establishes the connection, and then the peer device (e.g. the client device 110-p) sends packets along the established path. In some embodiments, the aforementioned "established path" may be implemented by utilizing a source-policy routing. More specifically, when the peer device such as the client device 110-p establishes the tunnel Tunnel(p, r) with the relay server 120, for the client device 110-p, the tunnel Tunnel(p, r) may be viewed as a new network interface on the client device 110-p. In this situation, the applications in the client device 110-p (e.g. iptables, ip6tables, arptables and ebtables) for managing the flow and transmission of the network packets may further perform recording operations, in which the packets coming from the IP address "60.2.2.22" will be transmitted back via this network interface transmit. In this way, the aforementioned second packet may be sent back along the established path.

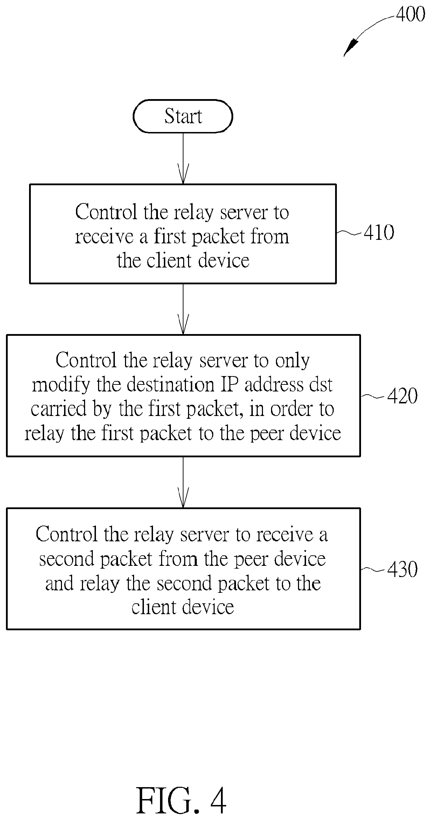

Fig. 4 is a flowchart illustrating a method 400 for relaying packets in a network system with the aid of network address translation according to an embodiment of the present invention. The method 400 may be an example of the aforementioned method for relaying packets with the aid of network addresses in the relay server. Further, the method 400 is applicable to the relay server 120 shown in Fig. 1, and more particularly, to the processing circuit 210 shown in Fig. 2. Under the control of the processing circuit 210, the relay server 120 may perform at least one portion of the operations in the above embodiments based on the control scheme of Fig. 3. The method 400 is illustrated as follows:
In Step 410, the processing circuit 210 controls the relay server 120 to receive a first packet from the client device 110-n, in which the first packet carries the source IP address src and the destination IP address dst.

In Step 420, the processing circuit 210 controls the relay server 120 to only modify the destination IP address dst carried by the first packet, in order to relay the first packet to the peer device (e.g. the client device 110-p), in which the peer device obtains the source IP address src from the first packet. For example, under the control of the processing circuit 210, before relaying the first packet to the peer device, the relay server 120 prevents modifying of the source IP address src carried by the first packet, in order to allow the peer device to obtain the source IP address src from the first packet. Further, when modifying the destination IP address dst carried by the first packet, the relay server 120 modifies the first destination IP address dst as the IP address of the peer device (e.g. the IP address IP(p) of the client device 110-p), such as the external IP address of the peer device (e.g. "59.120.41.39" shown in Fig. 3). Further, the source IP address src obtained from the first packet by the peer device (e.g. the client device 110-p) is the IP address of the client device 110-n (e.g. the external IP address of the client device 110-n, such as "100.10.33.45" shown in Fig. 3).

In Step 430, the processing circuit 210 controls the relay server 120 to receive a second packet from the peer device (e.g. the client device 110-p) and relay the second packet to the client device 110-n. For example, the transmission of the second packet may begin from the peer device (e.g. the client device 110-p) and end at the client device 110-n via the relay server 120, and this path of the second packet may be called a second path. Further, the transmission of the first packet may begin from the client device 110-n and end at the peer device (e.g. the client device 110-p) via the relay server 120, and this path of the first packet may be called a first path. Hence, the second path may be viewed as a reverse path of the first path.

According to some embodiments, in response to the triggering of the relay server 120, a tunnel between the relay server 120 and the peer device (e.g. the tunnel Tunnel(p, r)) is established to allow the second packet to be automatically relayed by the relay server 120. For example, based on the source-policy routing control, for all packets coming from the tunnel, all response packets transmitted by the peer device in response to the packets will be directed to the tunnel. Since the first packet belongs to the packets coming from the tunnel, when the peer device transmits the second packet in response to the first packet, the second packet is directed to the tunnel, such as the tunnel Tunnel(p, r) shown in Fig. 3. Further, in the situation where the source IP address src obtained from the first packet by the peer device (e.g. the client device 110-p) is the IP address IP(n) of the client device 110-n, the peer device may utilize the IP address IP(n) of the client device 110-n as a destination IP address carried by the second packet. When receiving the second packet, the relay server 120 may send the second packet back to the client device 110-n according to the destination IP address carried by the second packet.

In some embodiments, before the relay server 120 relays the second packet, the relay server 120 modifies the source IP address of the second packet as the IP address of the relay server 120 and then sends it to the client device 110-n. The client device 110-n may be unable to directly link to the peer device. The client device 110-n requires the relay server 120 to communicate with the peer device. Assuming that the relay server 120 does not modify the source IP address of the second packet before sending the second packet back to the client device 110-n, in this situation, the client device 110-n may determine that the second packet comes from the peer device. In some embodiments, the client device 110-n will attempt to directly transmit the next packet to the peer device, rather than transmit the next packet through the relay server 120. Since the client device 110-n cannot directly link to the peer device, the operation "attempting to directly transmit the next packet to the peer device" (rather than transmit the next packet through the relay server 120) will malfunction. Hence, in these embodiments, the source IP address of the second packet will be modified as the IP address of the relay server 120 before relaying the second packet to the relay server 120.

According to some embodiments, the aforementioned apparatus for relaying packets with the aid of network addresses in the relay server may include at least one portion of the relay server 120, and may refer to the method 400 to relay the packets through network address translation in the network system 100. For example, the portion of the relay server 120 may include the processing circuit 210, in which the processing circuit 210 may control operations of the relay server 120. In another example, the portion of the relay server 120 may represent the whole of the relay server 120 (i.e. the entire relay server 120).

According to some embodiments, the source IP address src obtained from the first packet by the peer device (e.g. the client device 110-p) may perform the source-policy routing control. According to some embodiments, the first packet may represent a first message of the user of the client device 110-n, and the second packet may represent a second message of the user of the peer device, in which these two users are transmitting messages to each other. According to some embodiments, the second packet may be an acknowledgement packet for responding to the first packet. The present invention is not limited thereto, however.

According to some embodiments, the tunnel between the relay server 120 and the peer device (e.g. the tunnel Tunnel(p, r)) may be implemented with the Virtual Private Network (VPN) tunnel. According to some embodiments, the tunnel between the relay server 120 and the peer device (e.g. the tunnel Tunnel(p, r)) may be implemented with other types of network tunnels, such as the Point to Point Tunneling Protocol (PPTP), Layer Two Tunneling Protocol (L2TP), and Internet Protocol Security (IPsec).

The present invention provides many advantages over the related arts. The behaviors of the relay server 120 (e.g. the operations mentioned in the above embodiments) may improve the loading ability of the relay server 120. Further, the client device 110-n may link to the relay server 120 without installing additional software. For the packets to be transmitted to the peer device (e.g. the client device 110-p), the relay server 120 will only modify the destination IP address of these packets, and will prevent modifying of the source IP address of these packets, in order to allow the peer device to obtain the real IP address of the client device 110-n. Hence, for the peer device (e.g. the client device 110-p), the relay server 120 is transparent, and the user space application and firewall of the peer device do not require additional settings. The communications mechanism implemented with any of the above embodiments may raise the user experience for users of the N client devices {110-1, 110-2, ..., 110-N}.

## Claims

1. A method for relaying packets in a network system (100) with the aid of network address translation, **characterized by**:
controlling a relay server (120) to receive a first packet from a client device (110-1), wherein the first packet carries a source Internet Protocol address, hereinafter IP address, and a destination IP address;
controlling the relay server (120) to modify the destination IP address carried by the first packet in order to relay the first packet to a peer device, wherein the peer device obtains the source IP address from the first packet; and
controlling the relay server (120) to receive a second packet from the peer device and relay the second packet to the client device (110-1).

2. An apparatus for relaying packets in a network system (100) with the aid of network address translation, the apparatus **characterized by**:
a processing circuit, positioned in a relay server (120) of the network system (100), the processing circuit arranged to control operations of the relay server (120), wherein the operations of the relay server (120) comprise:
the relay server (120) receiving a first packet from a client device (110-1), wherein the first packet carries a source Internet Protocol (IP) address and a destination IP address;
the relay server (120) modifying the destination IP address carried by the first packet in order to relay the first packet to a peer device, wherein the peer device obtains the source IP address from the first packet; and
the relay server (120) receiving a second packet from the peer device and relaying the second packet to the client device (110-1).

3. The method of claim 1 or the apparatus of claim 2, **characterized in that** before relaying the first packet to the peer device, the relay server (120) prevents modifying of the source IP address carried by the first packet, in order to allow the peer device to obtain the source IP address from the first packet.

4. The method of claim 1 or the apparatus of claim 2, **characterized in that** when modifying the destination IP address carried by the first packet, the relay server (120) modifies the destination IP address carried by the first packet as an IP address of the peer device.

5. The method or the apparatus of claim 4, **characterized in that** the IP address of the peer device is an external IP address of the peer device.

6. The method of claim 1 or the apparatus of claim 2, **characterized in that** the source IP address obtained from the first packet by the peer device is an IP address of the client device (110-1).

7. The method or the apparatus of claim 6, **characterized in that** the IP address of the client device (110-1) is an external IP address of the client device (110-1).

8. The method of claim 1 or the apparatus of claim 2, **characterized in that** a second path for transmitting the second packet from the peer device to the client device (110-1) via the relay server (120) is a reverse path of a first path for transmitting the first packet from the client device (110-1) to the peer device via the relay server (120).

9. The method or the apparatus of claim 8, **characterized in that** in response to the triggering of the relay server (120), a tunnel between the relay server (120) and the peer device is established to allow the second packet to be automatically relayed by the relay server (120).

10. The method or the apparatus of claim 8, **characterized in that** the source IP address obtained from the first packet by the peer device is an IP address of the client device (110-1); and the peer device utilizes the IP address of the client device (110-1) as a destination IP address carried by the second packet.

11. The method or the apparatus of claim 10, **characterized in that** when the second packet is received, the relay server (120) refers to the destination IP address carried by the second packet to send the second packet to the client device (110-1).

12. An apparatus for relaying packets in a network system (100) with the aid of network address translation according to the method of claim 1, **characterized in that** the apparatus comprises at least one portion of the relay server (120).

13. The apparatus of claim 11, **characterized in that** the at least one portion of the relay server (120) comprises a processing circuit, and the processing circuit is arranged to control operations of the relay server (120).

14. The apparatus of claim 11, **characterized in that** the portion of the relay server (120) comprises the entire relay server (120).
